(19) Europäisches Patentamt
European Patent Office
Office européen des brevets

(11) **EP 4 080 617 A1**

(12) **EUROPEAN PATENT APPLICATION**
published in accordance with Art. 153(4) EPC


(43) Date of publication:
**26.10.2022 Bulletin 2022/43**

(21) Application number: **20902584.0**

(22) Date of filing: **15.12.2020**

(51) International Patent Classification (IPC):
***H01M 4/62*** *(2006.01)* ***H01M 4/13*** *(2010.01)*
***H01M 4/139*** *(2010.01)* ***H01M 10/0562*** *(2010.01)*

(52) Cooperative Patent Classification (CPC):
**H01M 4/13; H01M 4/139; H01M 4/62;**
**H01M 10/0562;** Y02E 60/10; Y02P 70/50

(86) International application number:
**PCT/JP2020/046633**

(87) International publication number:
**WO 2021/125150 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.12.2019 JP 2019228504**



(71) Applicant: **Daikin Industries, Ltd.**
**Osaka-shi, Osaka 530-8323 (JP)**

(72) Inventors:
- **YAMADA, Takaya**
  **Osaka-shi, Osaka 530-8323 (JP)**
- **FUJIWARA, Kae**
  **Osaka-shi, Osaka 530-8323 (JP)**
- **SHINODA, Chihiro**
  **Osaka-shi, Osaka 530-8323 (JP)**
- **TERADA, Junpei**
  **Osaka-shi, Osaka 530-8323 (JP)**

(74) Representative: **Hoffmann Eitle**
**Patent- und Rechtsanwälte PartmbB**
**Arabellastraße 30**
**81925 München (DE)**


(54) **SOLID-SECONDARY-BATTERY SLURRY, METHOD FOR FORMING SOLID-SECONDARY-BATTERY LAYER, AND SOLID SECONDARY BATTERY**


(57) The present invention provides an oxide-based solid-state secondary battery which may be enlarged at a low cost and for which production costs are reduced. A binder for a solid-state secondary battery using an oxide-based solid-state electrolyte, wherein the binder contains a vinylidene fluoride unit and a fluorinated monomer unit excluding the vinylidene fluoride unit.





Processed by Luminess, 75001 PARIS (FR)

## Description

### Technical Field

The present disclosure relates to a slurry for a solid-state secondary battery, a method for forming a layer for a solid-state secondary battery, and a solid-state secondary battery.

### Background Art

Studies on a solid-state secondary battery as a battery excellent in safety have been conducted. As a solid-state conductor which is used for a solid-state secondary battery, a sulfide-based conductor and an oxide-based conductor are known, and studies on solid-state secondary batteries using these have been conducted. In an oxide-based solid-state secondary battery among these solid-state secondary batteries, forming an electrode layer and a solid-state electrolyte layer by preparing a slurry in which a binder is not used and sintering the slurry by heating it at a high temperature of 400°C or higher is known in the art.
Patent Literature 1 discloses using a binder having a fluorine-based copolymer containing tetrafluoroethylene in a positive electrode side electrolyte layer of a solid-state secondary battery.
Patent Literature 2 discloses using a binder containing vinylidene fluoride in a positive electrode side electrolyte layer of a solid-state secondary battery.
Patent Literatures 3 and 4 disclose a slurry for forming a layer that forms a solid-state secondary battery.
Further, in recent years, enlargement of a solid-state secondary battery has been desired.
Patent Literature 5 discloses a method for producing an electrode body, using polyvinylidene fluoride as a binder and not performing sintering at a high temperature.

### Citation List

#### Patent Literature

Patent Literature 1: International Publication No. WO 2015/049996
Patent Literature 2: Japanese Patent Laid-Open No. 2016-164888
Patent Literature 3: Japanese Patent Laid-Open No. 2019-46721
Patent Literature 4: Japanese Patent Laid-Open No. 2007-5279
Patent Literature 5: Japanese Patent Laid-Open No. 2017-188379

### Summary of Invention

#### Technical Problem

An object of the present disclosure is to provide a binder for a solid-state secondary battery using an oxide-based solid-state electrolyte, the binder having an excellent effect of suppressing gelation of a slurry.

#### Solution to Problem

The present disclosure is a binder for a solid-state secondary battery using an oxide-based solid-state electrolyte, wherein the binder is a fluorine-containing polymer containing a vinylidene fluoride unit and a fluorinated monomer unit excluding the vinylidene fluoride unit.
The binder preferably contains 50.0 to 90.0% by mole of a polymerization unit based on vinylidene fluoride with respect to the total amount of polymerization units.
The fluorine-containing polymer preferably has a number average molecular weight of 50,000 to 2,000,000.
The binder preferably further comprises polyvinylidene fluoride.
The present disclosure is also a slurry for a solid-state secondary battery, comprising an oxide-based solid-state electrolyte and a binder,
wherein the binder is the binder according to any of the binders described above.
The oxide-based solid-state electrolyte preferably comprises lanthanum.
The oxide-based solid-state electrolyte is preferably a garnet type ion-conducting oxide.
The present disclosure is also a method for forming a layer for a solid-state secondary battery, the method

comprising applying a slurry to a substrate and drying the slurry by heating,
wherein the slurry is the slurry for a solid-state secondary battery according to any one of the slurries described above.

The drying by heating is preferably performed at a temperature equal to or lower than a decomposition temperature of the binder.

The present disclosure is also a mixture for a solid-state secondary battery, having a solid-state electrolyte layer to be disposed between a positive electrode and a negative electrode, the positive electrode having an active material layer containing the binder for a solid-state secondary battery according to any of the binders described above, an oxide-based solid-state electrolyte, and an active material, or having a binder for a solid-state secondary battery and an oxide-based solid-state electrolyte.

The present disclosure is also a solid-state electrolyte layer for a solid-state secondary battery, comprising the binder for a solid-state secondary battery according to any of the binders described above.

The present disclosure is also a solid-state secondary battery comprising the above-described electrode for a solid-state secondary battery and/or the above-described solid-state electrolyte layer for a solid-state secondary battery.

Advantageous Effects of Invention

According to the present disclosure, an oxide-based solid-state secondary battery may be provided inexpensively by producing it into a large-area oxide-based solid-state secondary battery efficiently.

Brief Description of Drawings

[Figure 1] Figure 1 is a diagram showing one example of a layer structure of a solid-state battery of the present disclosure.

[Figure 2] Figure 2 is a schematic diagram showing a cross-sectional view of a cell for measuring ion conductivity.

Description of Embodiments

Hereinafter, the present disclosure will be described in detail.

The present disclosure provides a binder which is used for a solid-state secondary battery.

In a method in which a layer that comprises a solid-state secondary battery is formed by performing high-temperature sintering without using or without leaving a binder, heating at a high temperature is required for the purpose of sintering, and such a heating step has been a cause for an increase in the cost in large-area battery production.

The present disclosure has a characteristic in that a binder having a particular chemical structure is used in production of an electrode layer and an electrolyte. Further, when polyvinylidene fluoride, which is a relatively inexpensive, versatile polymer, is used as the binder, there is a problem that the binder causes gelation in a slurry. When the binder gels, a uniform slurry is not obtained, and therefore the binder cannot function as a binder.

Such gelation is likely to occur particularly in a slurry in which a positive electrode active material containing lithium hydroxide is used. It is inferred that some oxide-based solid-state electrolytes are vulnerable to moisture and react with moisture in the air to change into lithium hydroxide to be an alkali component which is a cause for gelation.

In the past, gelation has been known to occur also in the production of a slurry which is used for producing an electrode material in particular, and a large number of attempts to improve this have been made.

However, the problems of gelation, which have been studied in the past, are mainly derived from an electrode active material. Therefore, mainly with respect to a slurry for preparing an electrode, the problem has been solved by appropriately selecting the combination of the electrode active material and a binder to be used.

The present disclosure improves a point that causes a particularly significant problem in a slurry containing a solid-state electrolyte which is used in an all-solid-state battery.

That is, the solid-state electrolyte which is used in an all-solid-state battery is likely to generate lithium hydroxide, and it is inferred that such lithium hydroxide is a cause for gelation. Accordingly, the problem of gelation due to interaction with the solid-state electrolyte which is used in an all-solid-state battery is totally different from the conventional problem of gelation derived from an electrode active material. Accordingly, the method for solving the problem is completely different from that in the conventional problem of gelation derived from an electrode active material.

In the present disclosure, a fluorine-containing polymer essentially containing a vinylidene fluoride unit and a fluorinated monomer unit excluding the vinylidene fluoride unit is used as a binder. The problem of gelation does not occur by using the fluorine-containing polymer, and therefore a slurry may suitably be used. Thereby, an electrode having satisfactory performance may be formed inexpensively.

The binder of the present disclosure contains a vinylidene fluoride unit and a fluorinated monomer unit excluding

the vinylidene fluoride unit. Such a polymer is preferable in that the problem of gelation is unlikely to occur.

The binder preferably contains 50.0 to 90.0% by mole of a polymerization unit based on vinylidene fluoride with respect to the total amount of polymerization units. The binder preferably contains the polymerization unit based on vinylidene fluoride within the range in that suppression of gelation is achieved suitably and the functions as a binder may satisfactorily be exhibited.

The lower limit of the amount of the polymerization unit based on vinylidene fluoride is more preferably 55.0% by mole or more, and still more preferably 60.0% by mole or more.

The binder preferably has a number average molecular weight of 50,000 to 2,000,000. The number average molecular weight is preferably set within the range in that suppression of gelation is achieved suitably and the functions as a binder may satisfactorily be exhibited. Note that the number average molecular weight in the present disclosure may be measured by gel permeation chromatography (GPC) at 50°C using N,N-dimethyl formamide as a solvent. The columns which are used in the measurement are AS-8010, CO-8020, columns (three columns, GMHHR-H, connected in series) each manufactured by Tosoh Corporation, and RID-10A manufactured by SHIMADZU CORPORATION. The number average molecular weight is calculated from the data (reference: polystyrene) measured allowing the solvent to flow at a flow rate of 1.0 ml/min.

The fluorinated monomer unit excluding the vinylidene fluoride unit in the present disclosure is preferably at least one selected from the group consisting of tetrafluoroethylene (TFE), vinyl fluoride, trifluoroethylene, chlorotrifluoroethylene (CTFE), a fluoroalkyl vinyl ether, hexafluoropropylene (HFP), a (perfluoroalkyl)ethylene, 2,3,3,3-tetrafluoropropene, and trans-1,3,3,3-tetrafluoropropene, more preferably at least one selected from the group consisting of TFE, CTFE, and HFP, still more preferably at least one selected from the group consisting of TFE and HFP, and, in terms of long-time stability of a slurry, particularly preferably at least one selected from the group consisting of TFE and HFP.

The content of the fluorinated monomer unit excluding the vinylidene fluoride unit in the fluorine-containing polymer is preferably 1.0% by mole or more, more preferably 3.0% by mole or more, particularly preferably 5.0% by mole or more, and most preferably 10.0% by mole or more, and is preferably 50.0% by mole or less, more preferably 40.0% by mole or less, still more preferably 30.0% by mole or less, and particularly preferably 25.0% by mole or less, with respect to the total amount of monomer units.

The lower limit of the number average molecular weight in the present disclosure is more preferably 10,000, and still more preferably 16,000. The upper limit of the amount of the polymerization unit based on vinylidene fluoride is more preferably 1,400,000, and still more preferably 1,200,000.

The polymer may be produced by a general radical polymerization method. For example, the embodiment of polymerization may be any of the embodiments of bulk polymerization, solution polymerization, suspension polymerization, and emulsion polymerization, but the embodiment of the polymerization is preferably emulsion polymerization because the emulsion polymerization is easy to perform industrially.

In the polymerization, a polymerization initiator, a chain transfer agent, a surfactant, and a solvent may be used, and each of those known in the art may be used. In the polymerization for a copolymer, the polymerization initiator may be an oil-soluble radical polymerization initiator or a water-soluble radical initiator.

In some embodiments, the polymer has a polymerization unit of a non-fluorinated monomer within the range where the effects of the present disclosure are not impaired. Such a polymerization unit may be a general polymerization unit which is used in a fluorine-based polymer. Further, when such a general polymerization unit is used, the proportion thereof is preferably 5% by mole or less.

Examples of the non-fluorinated monomer include non-fluorinated monomers not having a polar group, such as ethylene and propylene, and non-fluorinated monomers having a polar group (hereinafter, sometimes referred to as polar group-containing monomers).

When a non-fluorinated monomer having a polar group is used, a polar group is introduced in the fluorine-containing polymer, and thereby further excellent adhesion between a positive electrode mixture layer and a current collector is obtained. The polar group which the fluorine-containing polymer can have is preferably at least one selected from the group consisting of a carbonyl group-containing group, an epoxy group, a hydroxy group, a sulfonate group, a sulfate group, a phosphate group, an amino group, an amide group, and an alkoxy group, more preferably at least one selected from the group consisting of a carbonyl group-containing group, an epoxy group, and a hydroxy group, and still more preferably a carbonyl group-containing group. A hydroxy group which comprises a part of the carbonyl group-containing group is not included in the hydroxy group. In addition, the amino group refers to a monovalent functional group formed by removing hydrogen from ammonia, or a primary or secondary amine.

The carbonyl group-containing group refers to a functional group having a carbonyl group (-C(=O)-). The carbonyl group-containing group is preferably a group represented by the general formula: -COOR wherein R represents a hydrogen atom, an alkyl group, or a hydroxy alkyl group, or a carboxylic anhydride group because further excellent adhesion between a positive electrode mixture layer and a current collector is obtained. The carbon number of the alkyl group and the hydroxy alkyl group is preferably 1 to 16, more preferably 1 to 6, and still more preferably 1 to 3. Specific examples of the group represented by the general formula: -COOR include - $COOCH_2CH_2OH$, $-COOCH_2CH(CH_3)OH$,

$-COOCH(CH_3)CH_2OH$, $-COOH$, - $COOCH_3$, and $-COOC_2H_5$. When the group represented by the general formula: -COOR is -COOH or contains -COOH, -COOH is a carboxylate salt, such as a metal salt of a carboxylic acid or an ammonium salt of a carboxylic acid, in some embodiments.

Further, in some embodiments, the carbonyl group-containing group is a group represented by the general formula: -X-COOR wherein the main chain of X is preferably formed by 2 to 15 atoms, the molecular weight of the atomic group represented by X is preferably 350 or lower, and R represents a hydrogen atom, an alkyl group, or a hydroxy alkyl group. The carbon number of the alkyl group and the hydroxy alkyl group is preferably 1 to 16, more preferably 1 to 6, and still more preferably 1 to 3.

The amide group is preferably a group represented by the general formula: -CO-NRR' wherein R and R' each independently represent a hydrogen atom, or a substituted or non-substituted alkyl group, or a bond represented by the general formula: -CO-NR"- wherein R" represents a hydrogen atom, a substituted or non-substituted alkyl group, or a substituted or non-substituted phenyl group.

Examples of the non-fluorinated monomer include: hydroxyalkyl (meth)acrylates, such as hydroxyethyl acrylate and 2-hydroxypropyl acrylate; alkylidene malonic acid esters, such as dimethyl methylidene malonate; vinyl carboxyalkyl ethers, such as vinyl carboxymethyl ether and vinyl carboxyethyl ether; carboxyalkyl (meth)acrylates, such as 2-carboxyethyl acrylate and 2-carboxyethyl methacrylate; (meth)acryloyloxy alkyl dicarboxylic acid esters, such as acryloyloxyethyl succinic acid, acryloyloxypropyl succinic acid, methacryloyloxyethyl succinic acid, acryloyloxyethyl phthalic acid, and methacryloyloxyethyl phthalic acid; monoesters of unsaturated dibasic acids, such as maleic acid monomethyl ester, maleic acid monoethyl ester, citraconic acid monomethyl ester, and citraconic acid monoethyl ester; and a monomer (2) represented by the general formula (2):

[Formula 1]

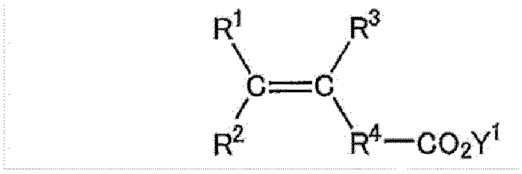

wherein $R^1$ to $R^3$ each independently represent a hydrogen atom or a C1-C8 hydrocarbon group, $R^4$ represents a single bond or a C1-C8 hydrocarbon group, $Y^1$ represents an inorganic cation and/or an organic cation.

The fluorine-containing polymer preferably contains a unit based on the monomer (2) represented by the general formula (2) as the polar group-containing monomer.

In the general formula (2), $Y^1$ represents an inorganic cation and/or an organic cation. Examples of the inorganic cation include cations such as H, Li, Na, K, Mg, Ca, Al, and Fe. Examples of the organic cations include cations such as $NH_4$, $NH_3R^5$, $NH_2R^5_2$, $NHR^5_3$ and $NR^5_4$ wherein $R^5$s each independently represent a C1-C4 alkyl group. $Y^1$ is preferably H, Li, Na, K, Mg, Ca, Al, or $NH_4$, more preferably H, Li, Na, K, Mg, Al, or $NH_4$, still more preferably H, Li, Al, or $NH_4$, and particularly preferably H. Note that the specific examples of the inorganic cations and the organic cations are written abbreviating signs and valences for convenience.

In the general formula (2), $R^1$ to $R^3$ each independently represent a hydrogen atom or a C1-C8 hydrocarbon group. The hydrocarbon group is a monovalent hydrocarbon group. The carbon number of the hydrocarbon group is preferably 4 or less. Examples of the hydrocarbon group include an alkyl group, an alkenyl group, and an alkynyl group each having the above-described carbon number, and the hydrocarbon group is preferably a methyl group or an ethyl group. $R^1$ and $R^2$ each are preferably independently a hydrogen atom, a methyl group, or an ethyl group, and $R^3$ is preferably a hydrogen atom or a methyl group.

In the general formula (2), $R^4$ represents a single bond or a C1-C8 hydrocarbon group. The hydrocarbon group is a divalent hydrocarbon group. The carbon number of the hydrocarbon group is preferably 4 or less. Examples of the hydrocarbon group include an alkylene group and an alkenylene group having the above-described carbon number, and among others, the hydrocarbon group is preferably at least one selected from the group consisting of a methylene group, an ethylene group, an ethylidene group, a propylidene group, and an isopropylidene group, and more preferably a methylene group.

The monomer (2) is preferably at least one selected from the group consisting of (meth)acrylic acid and a salt thereof, vinylacetic acid (3-butenoic acid) and a salt thereof, 3-penetenoic acid and a salt thereof, 4-pentenoic acid and a salt thereof, 3-hexenoic acid and a salt thereof, 4-heptenoic acid and a salt thereof, and 5-hexenoic acid and a salt thereof, and more preferably at least one selected from the group consisting of 3-butenoic acid and a salt thereof, and 4-pentenoic acid and a salt thereof.

The content of the non-fluorinated monomer unit in the fluorine-containing polymer is preferably 0.05 to 2.0%

by mole, more preferably 0.10% by mole or more, still more preferably 0.25% by mole or more, and particularly preferably 0.40% by mole or more, and is more preferably 1.5% by mole or less, with respect to the total amount of monomer units, because an increase in the viscosity of a positive electrode mixture may further be suppressed, further excellent adhesion between a positive electrode mixture layer and a current collector is obtained, and a positive electrode mixture layer having further higher density may be formed.

For example, when the polar group is an acid group of a carboxylic acid or the like, the content of the non-fluorinated monomer unit in the fluorine-containing polymer in the present specification may be measured by acid-base titration of the acid group.

In some embodiments, the binder further contains an additional fluorine-containing polymer within the range where the effects of the present disclosure are not inhibited.

The additional fluorine-containing polymer is not limited, and examples thereof include polyvinylidene fluoride. The polyvinylidene fluoride is a copolymer or a homopolymer in some embodiments but is more preferably a homopolymer. Polyvinylidene fluoride is preferably used together with the fluorine-containing polymer in that reduction in costs may be achieved while the effects are sustained.

When the additional fluorine-containing polymer is used together with the fluorine-containing polymer, the additional fluorine-containing polymer is preferably used in a proportion of 10 to 90% by weight with respect to the weight of the fluorine-containing polymer.

The present disclosure is also a slurry containing the binder described above and an oxide-based inorganic solid-state electrolyte. The slurry is such that the oxide-based inorganic solid-state electrolyte is dispersed in a liquid medium. The binder is preferably in a state of being dissolved or dispersed in the liquid medium.

The oxide-based inorganic solid-state electrolyte is preferably a compound containing an oxygen atom (O), having an ion-conducting property of a metal belonging to the group I or group II of the periodic table, and having an electron-insulating property.

Specific examples of the compound include $Li_{xa}La_{ya}TiO_3$ wherein xa=0.3 to 0.7 and ya=0.3 to 0.7(LLT),

$Li_{xb}La_{yb}Zr_{zb}M^{bb}_{mb}O_{nb}$ wherein $M^{bb}$ represents at least one or more elements of Al, Mg, Ca, Sr, V, Nb, Ta, Ti, Ge, In, and Sn, xb satisfies 5≤xb≤10, yb satisfies 1≤yb≤4, zb satisfies 1≤zb≤4, mb satisfies 0≤mb≤2, and nb satisfies 5≤nb≤20, $Li_{xc}B_{yc}M^{cc}_{zc}O_{nc}$ wherein $M^{cc}$ represents at least one or more elements of C, S, Al, Si, Ga, Ge, In, and Sn, xc satisfies 0≤xc≤5, yc satisfies 0≤yc≤1, zc satisfies 0≤zc≤1, and nc satisfies 0≤nc≤6,

$Li_{xd}(Al,Ga)_{yd}(Ti,Ge)_{zd}Si_{ad}P_{md}O_{nd}$ wherein 1≤xd≤3, 0≤yd≤1, 0≤zd≤2, 0≤ad≤1, 1≤md≤7, and 3≤nd≤13, $Li_{(3-2xe)}M^{ee}_{xe}D^{ee}O$ wherein xe represents a number of 0 or more and 0.1 or less, $M^{ee}$ represents a divalent metal atom, and $D^{ee}$ represents a halogen atom or a combination of two or more halogen atoms, $Li_{xf}Si_{yf}O_{zf}$ wherein 1≤xf≤5, 0<yf≤3, and 1≤zf≤10, $Li_{xg}S_{yg}O_{zg}$ wherein 1≤xg≤3, 0<yg≤2, and 1≤zg≤10, $Li_3BO_3$-$Li_2SO_4$, $Li_2O$-$B_2O_3$-$P_2O_5$, $Li_2O$-$SiO_2$, $Li_6BaLa_2Ta_2O_{12}$, $Li_3PO_{(4-3/2W)}N_w$ wherein w satisfies w<1, $Li_{3.5}Zn_{0.25}GeO_4$ having a LISICON (Lithium super ionic conductor) type crystal structure, $La_{0.55}Li_{0.35}TiO_3$ having a perovskite type crystal structure, $LiTi_2P_3O_{12}$ having a NASICON (Natrium super ionic conductor) type crystal structure,

$Li_{1+xh+yh}(Al,Ga)_{xh}(Ti,Ge)_{2-xh}Si_{yh}P_{3-yh}O_{12}$ wherein 0≤xh≤1 and 0≤yh≤1, and $Li_7La_3Zr_2O_{12}$ (LLZ) having a garnet type crystal structure. In addition, ceramic materials obtained by subjecting LLZ to element substitution are also known. For example, the ceramic material containing at least one element selected from the group consisting of Mg, Al, Si, Ca (calcium), Ti, V (vanadium), Ga (gallium), Sr, Y (yttrium), Nb (niobium), Sn (tin), Sb (antimony), Ba (barium), Hf (hafnium), Ta (tantalum), W (tungsten), Bi (bismuth), and lanthanoids elements is preferably adopted. Further, the compound is more preferably a LLZ-based ceramic material obtained by subjecting LLZ to element substitution with at least one of Mg (magnesium) and A wherein A represents at least one element selected from the group consisting of Ca (calcium), Sr (strontium), and Ba (barium). Furthermore, a phosphorus compound containing Li, P, and O is also desirable. Examples thereof include lithium phosphate ($Li_3PO_4$), LiPON obtained by substituting part of oxygen in lithium phosphate with nitrogen, and $LiPOD^1$ wherein $D^1$ represents at least one selected from Ti, V, Cr, Mn, Fe, Co, Ni, Cu, Zr, Nb, Mo, Ru, Ag, Ta, W, Pt, Au, and the like. Further, $LiA^1ON$ wherein $A^1$ represents at least one selected from Si, B, Ge, Al, C, Ga, and the like, or the like may also preferably be used.

The oxide-based inorganic solid-state electrolyte preferably contains lanthanum. The oxide-based inorganic solid-state electrolyte containing lanthanum is particularly preferable in terms of a satisfactory Li-ion-conducting property.

The oxide-based inorganic solid-state electrolyte is preferably a garnet type ion-conducting oxide. The oxide-based inorganic solid-state electrolyte having such a structure is preferably selected in terms of a satisfactory Li-ion-conducting property.

The volume average particle size of the inorganic solid-state electrolyte is not limited but is preferably 0.01 μm or larger, and more preferably 0.03 μm or larger. The upper limit is preferably 100 μm or smaller, and more preferably 50 μm or smaller. Note that the measurement of the average particle size of inorganic solid-state electrolyte particles is performed by the following procedure. The inorganic solid-state electrolyte particles are diluted using water (or heptane

in the case of a substance which is unstable in water) in a 20 ml sample bottle to prepare a dispersion of 1% by mass. To the dispersion sample after the dilution, an ultrasonic wave of 1 kHz is applied for 10 minutes, and the dispersion sample is used for the test immediately after that. Data capture is performed 50 times at a temperature of 25°C using a laser diffraction/scattering particle size distribution measurement apparatus, LA-920 (manufactured by HORIBA, Ltd.), using a quartz cell for measurement, and using this dispersion sample, and the volume average particle size is thereby obtained. For the other detailed conditions and the like, refer to description in JIS Z8828:2013 "Particle size analysis-Dynamic light scattering (DLS)" as necessary. Five samples are prepared for each level, and the average value of the five samples is adopted.

In view of reduction in interface resistance and retention of the reduced interface resistance when the inorganic solid-state electrolyte is used for an all-solid-state secondary battery, the content of the inorganic solid-state electrolyte in the solid components in the solid-state electrolyte composition is preferably 3% by mass or more, more preferably 4% by mass or more, and particularly preferably 5% by mass or more in an electrode in 100% by mass of the solid components. From the same viewpoint, the upper limit is preferably 99% by mass or less, more preferably 90% by mass or less, and particularly preferably 80% by mass or less. Further, in a solid-state electrolyte layer to be disposed between a positive electrode and a negative electrode, the content is preferably 50% by mass or more, more preferably 60% by mass or more, and particularly preferably 70% by mass or more. From the same viewpoint, the upper limit is preferably 99.9% by mass or less, more preferably 99.8% by mass or less, and particularly preferably 99.7% by mass or less. In some embodiments, the inorganic solid-state electrolyte is used singly, or two or more inorganic solid-state electrolytes are used in combination. Note that the solid contents (solid components) in the present specification refer to components which do not disappear by volatilization or vaporization when a drying treatment is performed at 170°C for 6 hours in a nitrogen atmosphere. The solid contents typically refer to the components other than the dispersion medium which will be described later.

Examples of an organic solvent which is used for preparing the slurry of the present disclosure include nitrogen-containing organic solvents, such as N-methylpyrrolidone, dimethylformamide, and dimethylacetamide, and low-boiling-point general-purpose organic solvents including: ketone-based solvents, such as acetone, methyl ethyl ketone, cyclohexanone, and methyl isobutyl ketone; ester-based solvents, such as ethyl acetate and butyl acetate; ether-based solvents, such as tetrahydrofuran and dioxane; and mixed solvents thereof. Among these, the organic solvent is preferably N-methylpyrrolidone because of providing particularly excellent stability and coatability to a slurry.

The slurry of the present disclosure preferably has a low moisture value, and specifically, the moisture value is preferably 200 ppm or less, more preferably 100 ppm or less, and still more preferably and most preferably 50 ppm or less.

The slurry of the present disclosure may be made into a slurry for a positive electrode and may be made into a slurry for a negative electrode. Further, the slurry of the present disclosure may also be made into a slurry for forming a solid-state electrolyte layer. The slurry of the present disclosure, when made into a slurry for an electrode among these, further contains active material particles. The active material particles may be made into a positive electrode active material and may be made into a negative electrode active material. The slurry of the present disclosure may more suitably be used as a slurry for a positive electrode, in which a positive electrode active material is used. The blending amount of the active material particles in the slurry of the present disclosure is preferably 1 to 99.0% by weight with respect to the total amount of the solid contents of the slurry. The lower limit is more preferably 10% by weight, and still more preferably 20% by weight. The upper limit is more preferably 98% by weight, and still more preferably 97% by weight. By blending the active material particles in the proportion, the active material is contained in the above-described proportion in the active material layer.

The positive electrode active material is not limited as long as it is capable of absorbing/desorbing lithium ions electrochemically. Specifically, the positive electrode active material is preferably a substance containing lithium and at least one transition metal, and examples thereof include a lithium transition metal composite oxide and a lithium-containing transition metal phosphate compound.

The transition metal in the lithium transition metal composite oxide is preferably V, Ti, Cr, Mn, Fe, Co, Ni, Cu, or the like, and specific examples of the lithium transition metal composite oxide include lithium/cobalt composite oxides, such as $LiCoO_2$, lithium/nickel composite oxides, such as $LiNiO_2$, lithium/manganese composite oxides, such as $LiMnO_2$, $LiMn_2O_4$, and $Li_2MnO_3$, and a composite oxide obtained by substituting part of the transition metal atom which is the main constituent of these lithium transition metal composite oxides with another metal, such as Al, Ti, V, Cr, Mn, Fe, Co, Li, Ni, Cu, Zn, Mg, Ga, Zr, Si, or the like. Specific examples of the substituted composite oxide include $LiNi_{0.5}Mn_{0.5}O_2$, $LiNi_{0.85}Co_{0.10}Al_{0.05}O_2$, $LiNi_{0.82}Co_{0.15}Al_{0.03}O_2$, $LiNi_{0.80}Co_{0.15}Al_{0.05}O_2$, $LiNi_{1/3}Co_{1/3}Mn_{1/3}O_2$, $LiNi_{0.80}Co_{0.10}Mn_{0.10}O_2$, $LiMn_{1.8}Al_{0.2}O_4$, $LiMn_{1.5}Ni_{0.5}O_4$, and $Li_4Ti_5O_{12}$. When the proportion of Ni is larger in the positive electrode active material containing Ni, the capacity of the positive electrode active material is higher, and therefore a further improvement in battery capacity may be expected.

The transition metal in the lithium-containing transition metal phosphate compound is preferably V, Ti, Cr, Mn, Fe, Co, Ni, Cu, or the like, and specific examples of the lithium-containing transition metal phosphate compound include

iron phosphates, such as $LiFePO_4$, $Li_3Fe_2(PO_4)_3$, and $LiFeP_2O_7$, cobalt phosphates, such as $LiCoPO_4$, and a lithium-containing transition metal phosphate compound obtained by substituting part of the transition metal atom which is the main constituent of these lithium-containing transition metal phosphate compounds with another metal, such as Al, Ti, V, Cr, Mn, Fe, Co, Li, Ni, Cu, Zn, Mg, Ga, Zr, Nb, Si, or the like.

The lithium-containing transition metal phosphate compound is preferably $LiCoO_2$, $LiNiO_2$, $LiMn_2O_4$, $LiNi_{0.82}CO_{0.15}Al_{0.03}O_2$, $LiNi_{0.80}Co_{0.15}Al_{0.05}O_2$, $LiNi_{1/3}Co_{1/3}Mn_{1/3}O_2$, or $LiFePO_4$ from the viewpoint of high voltage, high energy density, charging/discharging cycle characteristics, or the like in particular.

Further, a compound such that a substance having compositional features different from those of the substances that comprise the positive electrode active material which is the main constituent adheres to the front side of any of these positive electrode active materials may also be used. Examples of the substance which adheres to the front side include oxides, such as aluminum oxide, silicon oxide, titanium oxide, zirconium oxide, magnesium oxide, calcium oxide, boron oxide, antimony oxide, and bismuth oxide, sulfate salts, such as lithium sulfate, sodium sulfate, potassium sulfate, magnesium sulfate, calcium sulfate, and aluminum sulfate, and carbonate salts, such as lithium carbonate, calcium carbonate, and magnesium carbonate.

Any of these substances which adhere to the front side may be allowed to adhere to the front side of the positive electrode active material by, for example, a method of dissolving or suspending the substance in a solvent, adding the substance to the positive electrode active material by impregnation of the positive electrode active material with the substance, and drying the impregnated positive electrode active material, a method of dissolving or suspending a precursor for a substance adhering to the front side in a solvent, adding the precursor to the positive electrode active material by impregnation of the positive electrode active material with the precursor, and then reacting the precursor with the positive electrode active material by heating or the like, or a method of adding the substance to a precursor for the positive electrode active material and simultaneously sintering a resultant mixture.

The substance adhering to the front side is used in an amount of preferably 0.1 ppm, more preferably 1 ppm, and still more preferably 10 ppm as the lower limit, and is used in an amount of preferably 20%, more preferably 10%, and still more preferably 5% as the upper limit, in terms of mass with respect to the mass of the positive electrode active material. Due to the substance adhering to the front side, the oxidation reaction of the nonaqueous electrolytic solution on the front side of the positive electrode active material may be suppressed and the battery life may be improved, but when the adhesion amount is too small, the effect is not exhibited sufficiently, and when the adhesion amount is too large, absorption and desorption of lithium ions are inhibited, and therefore resistance is increased in some cases.

With respect to the shape of the positive electrode active material particles, a lump-like shape, a polyhedral shape, a spherical shape, an oval spherical shape, a plate-like shape, a needle-like shape, a columnar shape, and the like, which have conventionally been used, are used, but among others, the shape of secondary particles, which are formed by aggregation of primary particles, is preferably a spherical shape or an oval spherical shape. Usually, in an electrochemical element, an active material in an electrode expands/contracts with charging/discharging of the electrochemical element, and therefore deterioration, such as destruction of the active material or conductive path cut-off due to the stress in the expansion/contraction, is likely to occur. Therefore, the active material is more preferably the one such that primary particles aggregate to form secondary particles than a single-particle active material consisting of primary particles because the stress in the expansion/contraction is relaxed to prevent the deterioration. In addition, the particles are more preferably spherical or oval spherical particles than plate-like particles having an equiaxial orientation property because orientation during molding the electrode is small and therefore expansion/contraction of the electrode during charging/discharging is small, and besides, such particles are easily mixed in a uniform manner in mixing with a conductive assistant when the electrode is made.

The tap density of the positive electrode active material is usually 1.3 $g/cm^3$ or more, preferably 1.5 $g/cm^3$ or more, more preferably 1.6 $g/cm^3$ or more, and most preferably 1.7 $g/cm^3$ or more. When the tap density of the positive electrode active material is below the lower limit, the amount of the dispersion medium needed when the positive electrode active material is formed is increased, the necessary amount of the conductive assistant and the binder is also increased, and the filling ratio of the positive electrode active material in the positive electrode active material layer is restricted, so that the battery capacity is restricted in some cases. By using a metal composite oxide powder having a high tap density, a high-density positive electrode active material layer may be formed. In general, the tap density is preferable when it is larger and there is no upper limit, but when the tap density is too large, the diffusion, in which a non-aqueous electrolytic solution is used as a medium, of lithium ions in the positive electrode active material layer, is rate-determining, and load characteristics are likely to lower in some cases, and therefore the tap density is usually 2.5 $g/cm^3$ or less, and preferably 2.4 $g/cm^3$ or less.

With respect to the tap density of the positive electrode active material, the positive electrode active material is allowed to pass through a sieve having an opening size of 300 $\mu m$ to drop the sample into a 20 $cm^3$ tapping cell and fill the cell volume, thereafter, tapping with a stroke length of 10 mm is conducted 1,000 times using a powder density measurement device (for example, Tap Denser manufactured by Seishin Enterprise Co., Ltd.), and the density determined from the volume on that occasion and the weight of the sample is defined as the tap density.

The median diameter d50 (secondary particle size in the case where primary particles aggregate and secondary particles are formed) of the positive electrode active material particles is usually 0.1 μm or larger, preferably 0.5 μm or larger, more preferably 1 μm or larger, and most preferably 3 μm or larger, and is usually 20 μm or smaller, preferably 18 μm or smaller, more preferably 16 μm or smaller, and most preferably 15 μm or smaller. When the median diameter d50 is below the lower limit, a high-bulk-density product is not obtained in some cases, and when the median diameter d50 exceeds the upper limit, the diffusion of lithium in the particles takes time, and therefore a problem occurs in some cases, such as a problem that lowering of the battery performance is brought about, or a problem that when a positive electrode of a battery is made, that is when a positive electrode active material, and a conductive assistant, a binder, and the like are made into a slurry with a solvent, and then the slurry is applied in the form of a thin film, a stripe occurs. In such a case, by mixing two or more positive electrode active materials each having a different median diameter d50, the filling property during making a positive electrode may further be improved.

Note that the median diameter d50 in the present disclosure is measured by a laser diffraction/scattering particle size distribution measurement apparatus known in the art. When LA-920 manufactured by HORIBA, Ltd. is used as the particle size distribution analyzer, the median diameter d50 is measured using a 0.1% by mass sodium hexametaphosphate aqueous solution as a dispersion medium which is used in measurement and setting a refractive index for measurement to 1.24 after ultrasonic dispersion for 5 minutes.

In the case where primary particles aggregate and secondary particles are formed, the average primary particle size of the positive electrode active material is usually 0.01 μm or larger, preferably 0.05 μm or larger, more preferably 0.08 μm or larger, and most preferably 0.1 μm or larger, and is usually 3 μm or smaller, preferably 2 μm or smaller, more preferably 1 μm or smaller, and most preferably 0.6 μm or smaller. When the average primary particle size exceeds the upper limit, spherical secondary particles are difficult to form, which gives an adverse influence on the filling property of the powder and lowers the specific surface area significantly, and therefore a possibility that the battery performance, such as output characteristics, is lowered is high in some cases. Conversely, when the average primary particle size is below the lower limit, the crystal is usually undeveloped, and therefore a problem, such as a problem that the reversibility of charging/discharging is poor, occurs in some cases. Note that the primary particle size is measured by observation using a scanning electron microscope (SEM). Specifically, the primary particle size is determined in such a way that in a photograph of 10,000 magnifications, the longest value of intercepts made by the right and left boundary lines of a primary particle with respect to straight lines in the horizontal direction is determined for arbitrary 50 primary particles and an average value of the longest values is taken.

The BET specific surface area of the positive electrode active material is 0.2 $m^2/g$ or larger, preferably 0.3 $m^2/g$ or larger, and more preferably 0.4 $m^2/g$ or larger, and is 4.0 $m^2/g$ or smaller, preferably 2.5 $m^2/g$ or smaller, and more preferably 1.5 $m^2/g$ or smaller. When the BET specific surface area is smaller than this range, the battery performance is likely to lower, and when the BET specific surface area is larger than this range, the tap density is difficult to increase, so that a problem may be likely to occur in the coating property when the positive electrode active material is formed.

The BET specific surface area is defined as a value measured using a surface area meter (for example, full automatic surface area measurement apparatus manufactured by Okura Riken Co., Ltd.) by a nitrogen adsorption BET one-point method according to a gas flow method using a nitrogen/helium mixed gas obtained by accurately adjusting a value of the relative pressure of nitrogen with respect to the atmospheric pressure to 0.3, wherein the value is measured after performing preliminary drying for a sample at 150°C for 30 minutes under nitrogen circulation.

A general method as a method for producing an inorganic compound is used as the method for producing the positive electrode active material. Various methods are conceivable for making a spherical or oval spherical active material in particular, and examples thereof include a method of obtaining an active material in such a way that a transition metal raw material substance, such as a transition metal nitrate or sulfate, and if necessary, raw material substances for other elements are dissolved, or pulverized and dispersed into a solvent, such as water, and pH is adjusted under stirring to make and collect a spherical precursor; and if necessary, the precursor is dried, thereafter, a Li source, such as LiOH, $Li_2CO_3$, or $LiNO_3$, is added to sinter a resultant mixture at a high temperature, a method of obtaining an active material in such a way that a transition metal raw material substance, such as a transition metal nitrate, sulfate, hydroxide, or oxide, and if necessary, raw material substances for other elements are dissolved or pulverized and dispersed into a solvent, such as water, and a resultant mixture is dried and molded with a spray dryer or the like to make a spherical or oval spherical precursor; and a Li source, such as LiOH, $Li_2CO_3$, or $LiNO_3$, is added to the precursor to sinter a resultant mixture at a high temperature, and a method of obtaining an active material in such a way that a transition metal raw material substance, such as a transition metal nitrate, sulfate, hydroxide, or oxide, a Li source, such as LiOH, $Li_2CO_3$, or $LiNO_3$, and if necessary, raw material substances for other elements are dissolved, or pulverized and dispersed into a solvent, such as water, and a resultant mixture is dried and molded with a spray dryer or the like to make a spherical or oval spherical precursor; and the precursor is sintered at a high temperature.

Note that in some embodiments, the positive electrode active material is used singly, or two or more positive electrode active materials each having different compositional features or each having different physical properties as a powder are used together in an arbitrary combination and ratio.

The negative electrode active material is not limited as long as it is capable of absorbing/desorbing lithium ions electrochemically, and examples thereof include carbonaceous materials, metal oxides, such as tin oxide and silicon oxide, metal composite oxides, lithium single substance, lithium alloys, such as lithium aluminum alloy, and metals, such as Sn and Si, capable of forming an alloy with lithium. In some embodiments, these are used singly, or two or more of these are used together in an arbitrary combination and ratio. Among others, a carbonaceous material or a lithium composite oxide is preferably used in terms of safety.

The metal composite oxide is not limited as long as it is capable of absorbing/desorbing lithium, but the metal composite oxide preferably contains titanium and/or lithium as constituents from the viewpoint of high-current-density charging/discharging characteristics.

The carbonaceous material is preferably selected from

(1) natural graphite,
(2) an artificial carbonaceous substance and an artificial graphite substance; and a carbonaceous material such that any of carbonaceous substances{for example, a solution obtained by dissolving any of natural graphite, coal coke, petroleum coke, coal pitch, petroleum pitch, or a substance obtained by subjecting any of these types of pitch to an oxidation treatment, needle coke, pitch coke, and a carbon material obtained by graphitizing part of needle coke or pitch coke, furnace black, acetylene black, a pyrolysate of organic matter, such as a pitch carbon fiber, carbonizable organic matter (for example, coal tar pitch ranging from soft pitch to hard pitch, or coal heavy oil such as oil obtained by dry distillation/liquefaction, rectified heavy oil such as normal pressure residue oil and reduced pressure residue oil, decomposition petroleum heavy oil such as ethylene tar, which is produced as a by-product at the time of pyrolysis of crude oil, naphtha, or the like, aromatic hydrocarbons such as acenaphthylene, decacyclene, anthracene, and phenanthrene, N-containing cyclic compounds such as phenazine and acridine, S-containing cyclic compounds such as thiophene and bithiophene, polyphenylenes such as biphenyl and terphenyl, organic polymers such as polyvinyl chloride, polyvinyl alcohol, polyvinyl butyral, insolubilized products thereof, and polyacrylonitrile and polypyrrole, which contain nitrogen, organic polymers such as polythiophene, which contains sulfur, and polystyrene, natural polymers such as polysaccharides represented by cellulose, lignin, mannan, polygalacturonic acid, chitosan, and saccharose, thermoplastic resins such as polyphenylene sulfide and polyphenylene oxide, and thermosetting resins such as a furfuryl alcohol resin, a phenol-formaldehyde resin, and an imide resin) and carbides thereof, or carbonizable organic matter in low-molecular-weight organic solvent, such as benzene, toluene, xylene, quinoline, or n-hexane, and carbides of these} is thermally treated one time or more in a range of 400 to 3,200°C,
(3) a carbonaceous material such that a negative electrode active material layer is composed of at least two or more types of carbonaceous matter each having different crystallinity and/or has an interface where the two or more types of carbonaceous matter each having different crystallinity are in contact with each other, and
(4) a carbonaceous material such that a negative electrode active material layer is composed of at least two or more types of carbonaceous matter each having a different orientation property and/or has an interface where the two or more types of carbonaceous matter each having a different orientation property are in contact with each other,

because the balance between initial irreversible capacity and high-current-density charging/discharging characteristics is satisfactory.

Further, in some embodiments, the negative electrode active material is any of metal oxide-based negative electrode active materials, such as GeO, $GeO_2$, SnO, $SnO_2$, PbO, and $PbO_2$, or a composite metal oxide or the like of any of these (for example, any of composite metal oxides disclosed in Japanese Patent Laid-Open No. 7-249409) in addition to a powdery carbonaceous material, such as graphite, active carbon, or a compound obtained by carbonizing a phenol resin, pitch, or the like by sintering.

In a battery, the conductive assistant is added as necessary for the purpose of improving electric conductivity when an electrode material having small electron conductivity, such as $LiCoO_2$ is used, and for example, carbon black, such as acetylene black and Ketjen black, a graphite fine powder or a carbon fiber, a carbonaceous substance, such as a carbon fiber, a single-walled carbon nanotube, multi-walled carbon nanotube, or a carbon nanohorn, a metal fine powder of nickel, aluminum, or the like, or a fiber may be used.

The content of the powdery electrode material is preferably 40% by mass or more in an electrode mixture in order to increase the capacity of an electrode to be obtained.

The content of the solvent and the like assuming the total mass of the slurry of the present disclosure to be 100% by mass is preferably 30 to 90% by mass. When the content of the solvent and the like is less than 30% by mass, the content of the solvent and the like is too small, and therefore the binder, the positive electrode active material, and the like are not dissolved or dispersed in the solvent and the like, so that there is a risk that a trouble occurs in forming a layer that forms a solid-state battery. On the other hand, when the content of the solvent and the like exceeds 90% by mass, the content of the solvent and the like is too large, and therefore there is a risk that the mass per unit area (coating) is difficult to control. The content of the solvent and the like assuming the total mass of the slurry to be 100%

by mass is more preferably 20 to 70% by mass, and still more preferably 25 to 65% by mass. Note that the proportion of the solid contents in the slurry is preferably 30 to 75% by mass.

The slurry of the present disclosure particularly preferably contains 0.1 parts by mass or more and 9.5 parts by mass or less of the above-described binder with respect to 100 parts by mass of the total mass of the solid contents in the slurry. In the case where the slurry is made into an electrode, when the amount of the binder is too small, the electrode is inferior in the adhesion in the electrode layer and the adhesion between a negative electrode layer and a current collector, so that handling of the electrode is difficult in some cases. When the amount of the binder is too large, the resistance of the electrode increases, so that a solid-state battery having sufficient performance cannot be obtained in some cases.

In the step of preparing the slurry of the present disclosure, the amount of the solid contents (electrode active material, oxide-based solid-state electrolyte, and binder) with respect to the amount of the solvent is not limited, but, for example, the amount of the solid contents in the slurry is preferably set to 30% by mass or more and 75% by mass or less. Due to such a proportion of the solid contents, an electrode or a solid-state electrolyte layer may more easily be produced. The lower limit of the proportion of the solid contents is more preferably 30% by mass or more, and the upper limit of the proportion of the solid contents is more preferably 75% by mass or less.

In the present disclosure, the slurry is preferably prepared according to the following procedure.

(1) The above-described binder is added into a solvent to obtain a binder solution containing the binder.

(2) The binder solution obtained in (1), an oxide-based solid-state electrolyte provided separately, and a positive electrode active material or a negative electrode active material to be used are added to a solvent, and a stirring treatment is performed on a resultant mixture, and thereby a "slurry for an electrode" in which the oxide-based solid-state electrolyte, the active material, and the binder are dispersed in the solvent is obtained. Further, a solvent is added to perform a dispersion treatment using a stirrer or the like on a resultant mixture, and thus a "slurry for an electrode" having a predetermined viscosity may be prepared while the electrode active material, the oxide-based solid-state electrolyte, and the binder are dispersed at a high level in the solvent. In some embodiments, a conductive assistant is added as necessary in step (2).

(3) In the case of the slurry for a solid-state electrolyte layer, the binder solution obtained in (1) and an oxide-based solid-state electrolyte provided separately are added to a solvent, and a dispersion treatment using a stirrer or the like is performed on a resultant mixture, and thereby a "slurry for a solid-state electrolyte layer" in which the oxide-based solid-state electrolyte and the binder are dispersed at a high level in the solvent is obtained. Further, a solvent is added to perform a dispersion treatment using a stirrer or the like on a resultant mixture, and thus a "slurry for a solid-state electrolyte layer" having a predetermined viscosity may be prepared while the electrode active material, the oxide-based solid-state electrolyte, and the binder are dispersed at a high level in the solvent. In some embodiments, a conductive assistant is added as necessary in step (3).

In this way, by adding the binder, the oxide-based solid-state electrolyte, and the electrode active material, which is used as necessary, in a stepwise manner and performing the dispersion treatments successively, the slurry in which each component is dispersed at a high level in the solvent may easily be obtained. When an optional component (conductive assistant or the like) other than these is added, the optional component is preferably added while the dispersion treatments are performed successively in the same manner.

However, even if the binder, the oxide-based solid-state electrolyte, and the electrode active material, which is used as necessary, and the optional component are added into the solvent at one time, and the dispersion treatment is performed at one time, the slurry may be obtained.

Note that the above-described stirrer is one example of the embodiment of the dispersion treatment. Besides, dispersion with a homogenizer, or the like is also conceivable.

In the step of preparing the slurry, the mixing ratio among the binder, the oxide-based solid-state electrolyte and the electrode active material, which is used as necessary, is suitable as long as it is a mixing ratio such that each layer, when formed, functions properly, and a mixing ratio known in the art may be adopted.

Note that 0.1 parts by mass or more and 9.5 parts by mass or less of the above-described binder with respect to the 100 parts by mass of the total mass of the solid contents in the slurry is particularly preferably contained. In the case where the slurry is made into an electrode, when the amount of the binder is too small, the electrode is inferior in the adhesion in the electrode layer and the adhesion between a negative electrode layer and a current collector, so that handling of the electrode is difficult in some cases. On the other hand, when the amount of the binder is too large, the resistance of the electrode increases, so that a solid-state battery having sufficient performance cannot be obtained in some cases.

In the step of preparing the slurry of the present disclosure, the amount of the solid contents (electrode active material, oxide-based solid-state electrolyte, and binder) with respect to the amount of the solvent is not limited, but, for example, the amount of the solid contents in the slurry is preferably set to 30% by mass or more and 75% by mass or

less. Due to such a proportion of the solid contents, a negative electrode may more easily be produced. The lower limit of the proportion of the solid contents is more preferably 50% by mass or more, and the upper limit of the proportion of the solid contents is more preferably 70% by mass or less.

The slurry of the present disclosure may be used for forming an electrode for a solid-state battery and/or an electrolyte layer for an oxide-based solid-state battery. The method for producing such an electrode for a solid-state battery is not limited and may be performed by (1) a step of providing a substrate, (2) a step of providing the slurry, and (3) a step of coating the slurry to form the electrode for an oxide-based solid-state battery.

Hereinafter, description will be made on the steps (1) to (3) in order.

Step (1) Step of Providing A Substrate

The substrate used in the present disclosure is not limited as long as it has a flat surface to such an extent that the slurry may be coated. In some embodiments, the substrate is a plate-like or sheet-like substrate. Further, in some embodiments, the substrate is prepared in advance or commercially available.

In some embodiments, the substrate which is used in the present disclosure is used for an oxide-based solid-state battery after forming an electrode for an oxide-based solid-state battery and/or an electrolyte layer for an oxide-based solid-state battery or is not used as a material for an oxide-based solid-state battery. Examples of the substrate which is used for an oxide-based solid-state battery include electrode materials, such as a current collector, and materials for an oxide-based solid-state electrolyte layer, such as an oxide-based solid-state electrolyte membrane. The electrode for an oxide-based solid-state battery and/or the electrolyte layer for an oxide-based solid-state battery obtained by using the slurry of the present disclosure is used as the substrate, and further, an electrode for an oxide-based solid-state battery and/or an electrolyte layer for an oxide-based solid-state battery may also be formed thereon.

Examples of the substrate which is not used as a material for an oxide-based solid-state battery include substrates for transfer, such as a sheet for transfer and a base plate for transfer. An electrode for an oxide-based solid-state battery and/or an electrolyte layer for an oxide-based solid-state battery formed on the substrate for transfer is bonded to an electrode for an oxide-based solid-state battery and/or an electrolyte layer for an oxide-based solid-state battery by thermocompression bonding or the like, thereafter, the substrate for transfer is released, and thereby the electrode for an oxide-based solid-state battery may be formed on the oxide-based solid-state electrolyte layer. In addition, an electrode for an oxide-based solid-state battery formed on the substrate for transfer is bonded to a current collector by thermocompression bonding or the like, thereafter, the substrate for transfer is released, and thereby the electrode for an oxide-based solid-state battery may be formed on the current collector for an electrode.

Step (2) Step of Providing the Slurry

This step may be performed according to the above-described method for preparing the slurry.

Step (3) Step of Coating the Slurry to Form the Electrode for Oxide-based Solid-state Battery or the Electrolyte Layer for Oxide-based Solid-state Battery

This step is a step of coating the slurry on at least any one of the surfaces of the substrate to form the electrode for an oxide-based solid-state battery.

In some embodiments, the electrode for an oxide-based solid-state battery and/or the electrolyte layer for an oxide-based solid-state battery is formed on only one surface of the substrate or formed on each surface of the substrate.

The method for coating the slurry, the method for drying the slurry, and the like may appropriately be selected. Examples of the coating method include a spray method, a screen printing method, a doctor blade method, a bar coat method, a roll coat method, a gravure printing method, and a die coat method. Examples of the drying method include drying under reduced pressure, drying by heating, and drying by heating under reduced pressure. Specific conditions in drying under reduced pressure and drying by heating are not limited, and these may appropriately be set. Note that the drying by heating is preferably performed at a temperature equal to or lower than the decomposition temperature of the binder. This is because the performance of the binder may sufficiently be exhibited by doing so. Note that with respect to the decomposition temperature of the binder, the weight loss thereof is recorded while the temperature is increased at a temperature-increasing rate of 10°C/min using a thermogravimetric analyzer [TGA] (manufactured by SHIMADZU CORPORATION), and a temperature at which the weight is reduced by 5% by weight is defined as the decomposition temperature.

The amount of the slurry to be coated is different depending on the compositional features of the slurry, the intended use of the electrode for an oxide-based solid-state battery and/or the electrolyte layer for an oxide-based solid-state battery, and the like and may be set in such a way as to be about 5 to about 30 $mg/cm^2$ in a dry state. In addition, the thickness of the electrode for an oxide-based solid-state battery and/or the electrolyte layer for an oxide-based solid-state battery is not limited and may be set to about 10 to 300 μm.

In some embodiments, the electrode for an oxide-based solid-state battery according to the present disclosure includes a current collector, and a lead connected to the current collector in addition to the active material layer.

The thickness of the active material layer which is used in the present disclosure is different depending on the intended use of the oxide-based solid-state battery, and the like but is preferably 10 to 300 μm, particularly preferably 20 to 280 μm, and most preferably 30 to 250 μm in particular.

The current collector which is used in the present disclosure is not limited as long as it has a function of performing current collection in the above-described active material layer. Examples of the material for the current collector include aluminum, SUS, copper, nickel, iron, titanium, chromium, gold, platinum, and zinc, and among others, aluminum and copper are preferable. Examples of the shape of the current collector include a foil-like shape, a plate-like shape, and a mesh-like shape, and among others, a foil-like shape is preferable.

The content of the binder is set to 0.5 to 9.5% by mass of the mass of the electrode for an oxide-based solid-state battery (preferably, the electrode active material layer), and thereby the electrode for an oxide-based solid-state battery according to the present disclosure exhibits excellent adhesive force, and an oxide-based solid-state battery using the positive electrode exhibits high output.

The present disclosure is also a secondary solid-state battery including the above-described electrode for an oxide-based solid-state battery and/or electrolyte layer for an oxide-based solid-state battery. The secondary solid-state battery is preferably a lithium ion battery. The oxide-based solid-state battery of the present disclosure is an oxide-based solid-state battery including a positive electrode, a negative electrode, and an oxide-based solid-state electrolyte layer interposed between the positive electrode and the negative electrode, wherein the electrode for an oxide-based solid-state battery and/or the electrolyte layer for an oxide-based solid-state battery contain the above-described binder of the present disclosure.

Figure 1 is a diagram showing one example of a layer structure of the oxide-based solid-state battery according to the present disclosure, the diagram schematically showing a cross section cut along the layering direction. Note that the oxide-based solid-state battery according to the present disclosure is not necessarily limited to only this example.

The oxide-based solid-state battery includes: a positive electrode 6 including a positive electrode active material layer 2 and a positive electrode current collector 4; a negative electrode 7 including a negative electrode active material layer 3 and a negative electrode current collector 5; and an oxide-based solid-state electrolyte layer 1 sandwiched between the positive electrode 6 and the negative electrode 7.

The positive electrode and the negative electrode, which are used in the present disclosure, are the same as the above-described electrode for an oxide-based solid-state battery. Hereinafter, the negative electrode and the oxide-based solid-state electrolyte layer, which are used for the oxide-based solid-state battery according to the present disclosure, and a separator and a battery case, which are suitably used for the oxide-based solid-state battery according to the present disclosure will be described in detail.

In some embodiments, the oxide-based solid-state battery of the present disclosure includes a separator between the positive electrode and the negative electrode. Examples of the separator include porous membranes of polyethylene, polypropylene, and the like; and nonwoven fabrics, such as a nonwoven fabric made of a resin such as polypropylene and a nonwoven fabric of glass fiber.

In some embodiments, the oxide-based solid-state battery of the present disclosure further includes a battery case. The shape of the battery case which is used in the present disclosure is not limited as long as the above-described positive electrode, negative electrode, the electrolyte layer for an oxide-based solid-state battery, and the like may be stored therein, and specific examples of the battery case include a cylindrical type, a rectangular type, a coin type, and a laminate type.

The solid-state battery of the present disclosure may be produced by a step of providing the electrolyte layer for an oxide-based solid-state battery, a step of kneading the positive or negative electrode active material, the binder, and the solvent or the dispersion medium to provide a slurry, and a step of coating the slurry on one surface of the electrolyte layer for an oxide-based solid-state battery to form the positive electrode, layering the negative electrode on the other surface of the electrolyte layer for an oxide-based solid-state battery, and pressing the positive electrode, the electrolyte layer for an oxide-based solid-state battery, and the negative electrode to produce an oxide-based solid-state battery.

## Examples

Hereinafter, the present disclosure will specifically be described based on Examples. In the following Examples, "parts" and "%" represent "parts by weight" and "% by weight," respectively unless otherwise noted. All the operations were performed in an atmosphere having a dew-point temperature of -60°C or lower.

Examples 1 to 10 and Comparative Examples 1 to 3

The binder described in Table 1 was dissolved in NMP to prepare an 8 wt% binder solution. Acetylene black as a conductive assistant in an amount of 0.35 g and 0.3 g of the binder solution in terms of solid contents were added and stirred. After the resultant mixture was cooled with ice for 2 minutes, a powder obtained by mixing 6.8 g of a solid-state electrolyte $Li_7La_3Zr_2O_{12}$ (hereinafter referred to as LLZ) and 13.28 g of a positive electrode active material ($LiNi_{1/3}Co_{1/3}Mn_{1/3}O_2$ (lithium nickel manganese cobalt oxide [NMC]) was added, and the resultant mixture was stirred again. Thereafter, 3.5 g of NMP was added, and the resultant mixture was stirred again.

[Table 1]

| | Compositional features | Number average molecular weight |
|---|---|---|
| Binder 1 | VdF/TFE=83.0/17.0(% by mole) | 270000 |
| Binder 2 | VdF/TFE=86.6/13.4(% by mole) | 274000 |
| Binder 3 | VdF/TFE=88.8/11.2(% by mole) | 305000 |
| Binder 4 | VdF/TFE=81.0/19.0(% by mole) | 283000 |
| Binder 5 | VdF/TFE=80.0/20.0(% by mole) | 230000 |
| Binder 6 | VdF/TFE=78.0/22.0(% by mole) | 265000 |
| Binder 7 | VdF/TFE=91.5/8.5 (% by mole) | 296000 |
| Binder 8 | VdF/TFE=82.9/17.1 (% by mole) | 300000 |
| Binder 9 | VdF=100% by mole | 120000 |
| Binder 10 | VdF=100% by mole | 295000 |
| Binder 11 | VdF=100% by mole | 270000 |

Example 11

The binder 1 was dissolved in NMP to prepare an 8wt% binder solution.

The solid-state electrolyte LLZ in an amount of 10.4 g, a negative electrode active material, and 0.21 g of the binder solution in terms of solid contents were added, stirred, and cooled with ice together with the container.

Example 12

The binder 5 was dissolved in NMP to prepare an 8 wt% binder solution.

The solid-state electrolyte LLZ in an amount of 6.8 g, 13.5 g of natural graphite as a negative electrode active material, and 0.41 g of the binder solution in terms of solid contents were added and stirred. The resultant mixture was cooled with ice together with the container for 2 minutes and was then stirred again.

Evaluation Method

After each slurry was prepared, whether or not gelation occurred over time in a state where the slurry was left to stand was visually observed. When the slurry gelled and lost fluidity, the slurry was rated as poor, and when the fluidity was retained, the slurry was rated as good. The results are shown together in Table 2.

[Table 2]

| | Binder | Active material | State of slurry | | | | | |
|---|---|---|---|---|---|---|---|---|
| | | | 0h | 1h | 3h | 5h | 10h | 20h |
| Example 1 | Binder 1 | $LiNi_{1/3}Mn_{1/3}Co_{1/3}O_2$ | Good | Good | Good | Good | Good | Good |
| Example 2 | Binder 2 | $LiNi_{1/3}Mn_{1/3}Co_{1/3}O_2$ | Good | Good | Good | Good | Good | Good |
| Example 3 | Binder 3 | $LiNi_{1/3}Mn_{1/3}Co_{1/3}O_2$ | Good | Good | Good | Good | Good | Poor |
| Example 4 | Binder 4 | $LiNi_{1/3}Mn_{1/3}Co_{1/3}O_2$ | Good | Good | Good | Good | Good | Good |

(continued)

| | Binder | Active material | State of slurry | | | | | |
|---|---|---|---|---|---|---|---|---|
| | | | 0h | 1h | 3h | 5h | 10h | 20h |
| Example 5 | Binder 5 | $LiNi_{1/3}Mn_{1/3}Co_{1/3}O_2$ | Good | Good | Good | Good | Good | Good |
| Example 6 | Binder 6 | $LiNi_{1/3}Mn_{1/3}Co_{1/3}O_2$ | Good | Good | Good | Good | Good | Good |
| Example 7 | Binder 7 | $LiNi_{1/3}Mn_{1/3}Co_{1/3}O_2$ | Good | Good | Good | Good | Poor | Poor |
| Example 8 | Binder 8 | $LiNi_{1/3}Mn_{1/3}Co_{1/3}O_2$ | Good | Good | Good | Good | Good | Good |
| Example 9 | Binder 5:Binder 10=5:5 | $LiNi_{1/3}Mn_{1/3}Co_{1/3}O_2$ | Good | Good | Good | Good | Good | Good |
| Example 10 | Binder 3:Binder 10=1:9 | $LiNi_{1/3}Mn_{1/3}Co_{1/3}O_2$ | Good | Good | Good | Good | Good | Poor |
| Example 11 | Binder 1 | - | Good | Good | Good | Good | Good | Good |
| Example 12 | Binder 5 | Natural graphite | Good | Good | Good | Good | Poor | Poor |
| Comparative Example 1 | Binder 9 | $LiNi_{1/3}Mn_{1/3}Co_{1/3}O_2$ | Good | Poor | Poor | Poor | Poor | Poor |
| Comparative Example 2 | Binder 10 | $LiNi_{1/3}Mn_{1/3}Co_{1/3}O_2$ | Good | Good | Poor | Poor | Poor | Poor |
| Comparative Example 3 | Binder 11 | Natural graphite | Poor | Poor | Poor | Poor | Poor | Poor |

As may be seen from the results in Table 2, when the binder of the present disclosure is used, a satisfactory slurry may be obtained without causing gelation.

Electrodes were prepared using each prepared slurry.

(Preparation of Negative Electrode)

The slurry for a negative electrode, prepared in Example 12, was coated on a copper foil, which is a negative electrode current collector, using a doctor blade, and dried at 100°C for 10 minutes. Thereafter, drying was performed with a vacuum dryer in which the temperature was set to 70°C for 12 hours to obtain a negative electrode including a negative electrode layer having a thickness of 100 μm, the negative electrode layer being formed on the front side of the negative electrode current collector. Such an active material layer did not cause a problem by visual observation, and therefore satisfactory film formation was able to be performed.

(Preparation of Positive Electrode)

The slurry for a positive electrode, prepared in Example 5, was coated on an aluminum foil, which is a positive electrode current collector, using a doctor blade, and dried at 100°C for 10 minutes. Thereafter, drying was performed with a vacuum dryer in which the temperature was set to 70°C for 12 hours to obtain a positive electrode including a positive electrode layer having a thickness of 90 μm, the positive electrode layer being formed on the front side of the positive electrode current collector. Such an active material layer did not cause a problem by visual observation, and therefore satisfactory film formation was able to be performed.

(Preparation of Solid-state Electrolyte Layer)

The electrolyte slurry prepared in Example 11 was coated on a releasable substrate (PET foil) using a doctor blade and dried at 100°C for 20 minutes. Thereafter, drying was performed with a vacuum dryer in which the temperature was set to 70°C for 12 hours to form a solid-state electrolyte layer having a thickness of 205 μm on the substrate. Such a solid-state electrolyte layer did not cause a problem by visual observation, and therefore satisfactory film formation was able to be performed.

<Preparation of Composition for Positive Electrode>

Zirconia beads having a diameter of 5 mm were put into a 45 ml zirconia container (manufactured by FRITSCH GmbH), and 6 parts by mass of NMC622, which is a positive electrode active material, 0.45 parts by mass of LiTFSI, 0.09 parts by mass of propylene carbonate, 4 parts by mass of LLZ (Li7La3Zr2O12 lithium lanthanum zirconate, volume average particle size 6.0 μm, manufactured by TOSHIMA Manufacturing Co., Ltd.) as an inorganic solid-state electrolyte, and 18.0 g of dimethyl carbonate as a low-boiling-point solvent (dispersion medium) were put therein. The binder 1 in an amount of 1 part by mass as solid contents was put therein, thereafter, the above-described container was set in a planetary ball mill manufactured by FRITSCH GmbH, and the resultant mixture was mixed at a number of revolutions of 100 rpm for 1 hour to prepare a composition for a positive electrode. Each composition for a positive electrode, obtained above, was applied to an aluminum foil having a thickness of 21 μm using an applicator, and the dispersion medium was volatilized and removed by drying at 130°C for 1 hour. Thereafter, the aluminum foil was pressurized (10 Pa, 1 minute) using a heat press machine while being heated (80°C). A positive electrode sheet consisting of a positive electrode current collector and a positive electrode active material layer was obtained in this manner.

Evaluation of Ion-conducting Property

The solid-state electrolyte sheet prepared above was cut out into a disk shape having a diameter of 14.5 mm, an aluminum foil cut out into a disk shape having a diameter of 15 mm was brought into contact with the solid-state electrolyte layer, spacers and washers were incorporated therein, and these were placed in a 2032 type coin case made of stainless steel. As shown in Figure 2, confining pressure (screw fastening pressure: 8N) was applied from the outside of the coin case to prepare a cell for measuring ion conductivity.

Specifically, the cell was left to stand in a thermostatic chamber of 30°C for 1 hour, and the alternating current impedance was measured at frequencies of 1 MHz to 1 Hz using an impedance analyzer manufactured by SOLARTRON ISA setting the voltage amplitude to 5 mV. Thereby, the resistance of the sample in the film thickness direction was determined, and the ion conductivity was determined from the following calculation formula.

$$\text{Ion conductivity (mS/cm)} = 1{,}000 \times \text{film thickness of sample (cm)}/(\text{resistance }(\Omega) \times \text{area of sample (cm}^2))$$

As a result, the ion conductivity was 0.17 (mS/cm).

Industrial Applicability

The binder of the present disclosure is used for producing a solid-state secondary battery. More specifically, the binder of the present disclosure may be used in forming each layer that forms a solid-state secondary battery. By the binder of the present disclosure, larger-sized solid-state secondary battery may be provided inexpensively and efficiently.

Reference Signs List

1 Oxide-based solid-state electrolyte layer
2 Positive electrode active material layer
3 Negative electrode active material layer
4 Positive electrode current collector
5 Negative electrode current collector
6 Positive electrode
7 Negative electrode

## Claims

1. A binder for a solid-state secondary battery using an oxide-based solid-state electrolyte, wherein the binder is a fluorine-containing polymer comprising a vinylidene fluoride unit and a fluorinated monomer unit excluding the

vinylidene fluoride unit.

2. The binder for a solid-state secondary battery according to claim 1, wherein the fluorine-containing polymer comprises 50.0 to 90.0% by mole of a polymerization unit based on vinylidene fluoride with respect to the total amount of polymerization units.

3. The binder for a solid-state secondary battery according to claim 1 or 2, wherein the fluorine-containing polymer has a number average molecular weight of 50,000 to 2,000,000.

4. The binder for a solid-state secondary battery according to any one of claims 1 to 3, further comprising polyvinylidene fluoride.

5. A slurry for a solid-state secondary battery, comprising an oxide-based solid-state electrolyte and a binder, wherein the binder is the binder according to any of claims 1 to 4.

6. The slurry for a solid-state secondary battery according to claim 5, wherein the oxide-based solid-state electrolyte comprises lanthanum.

7. The slurry for a solid-state secondary battery according to claim 5 or 6, wherein the oxide-based solid-state electrolyte is a garnet type ion-conducting oxide.

8. A method for forming a layer for a solid-state secondary battery, the method comprising applying a slurry to a substrate and drying the slurry by heating, wherein the slurry is the slurry for a solid-state secondary battery according to any one of claims 5 to 7.

9. The method for forming a layer for a solid-state secondary battery according to claim 8, wherein the drying by heating is performed at a temperature equal to or lower than a decomposition temperature of the binder.

10. An electrode for a solid-state secondary battery, comprising an active material layer comprising: the binder for a solid-state secondary battery according to any of claims 1 to 4; and an active material.

11. A solid-state electrolyte layer for a solid-state secondary battery, comprising the binder for a solid-state secondary battery according to any of claims 1 to 4.

12. A solid-state secondary battery comprising:

the electrode for a solid-state secondary battery according to claim 10; and/or
the solid-state electrolyte layer for a solid-state secondary battery according to claim 11.

Fig. 1

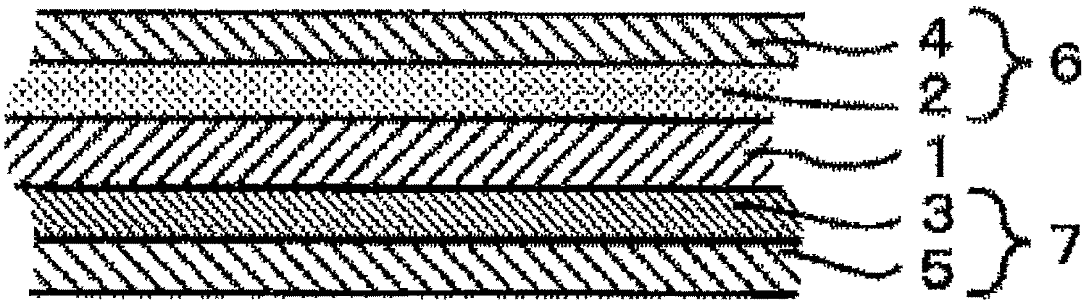


Fig. 2

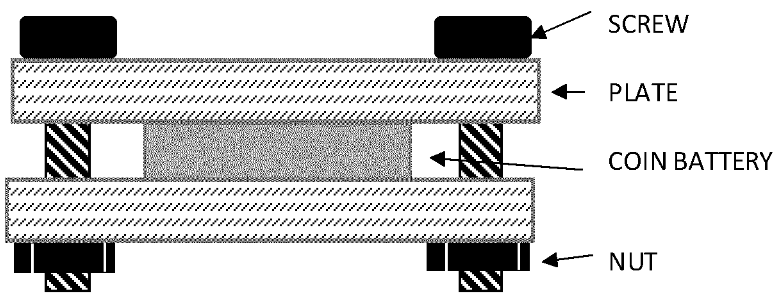


CROSS-SECTIONAL VIEW

## INTERNATIONAL SEARCH REPORT

International application No. PCT/JP2020/046633

A. CLASSIFICATION OF SUBJECT MATTER
H01M 4/62(2006.01)i; H01M 4/13(2010.01)i; H01M 4/139(2010.01)i; H01M 10/0562(2010.01)i
FI: H01M4/62 Z; H01M10/0562; H01M4/13; H01M4/139
According to International Patent Classification (IPC) or to both national classification and IPC

B. FIELDS SEARCHED
Minimum documentation searched (classification system followed by classification symbols)
H01M4/62; H01M4/13; H01M4/139; H01M10/0562

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)
CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | JP 2001-15125 A (KYOCERA CORP.) 19 January 2001 (2001-01-19) | 1-12 |
| A | JP 2012-227107 A (SUMITOMO ELECTRIC INDUSTRIES, LTD.) 15 November 2012 (2012-11-15) | 1-12 |
| A | JP 2016-25025 A (TOYOTA MOTOR CORP.) 08 February 2016 (2016-02-08) | 1-12 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 09 February 2021 (09.02.2021) | 22 February 2021 (22.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application no.
PCT/JP2020/046633

| Patent Documents referred in the Report | Publication Date | Patent Family | Publication Date |
|---|---|---|---|
| JP 2001-15125 A | 19 Jan. 2001 | (Family: none) | |
| JP 2012-227107 A | 15 Nov. 2012 | (Family: none) | |
| JP 2016-25025 A | 08 Feb. 2016 | US 2016/0028108 A1<br>CN 105304904 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015049996 A
- JP 2016164888 A
- JP 2019046721 A
- JP 2007005279 A
- JP 2017188379 A
- JP 7249409 A